# EUROPEAN PATENT APPLICATION

(11) **EP 1 615 102 A2**
(43) Date of publication of application: **11.01.2006**
(21) Application number: 05252486.5
(22) Date of filing: 20.04.2005
(51) Int. Cl.: G06F 1/00, H04B 1/38

(54) **Team sport apparatus**

(30) Priority: 20.04.2004 GB 0408790
(71) Applicant: Clements, Robert James, Chigwell Essex IG7 5PW (GB)
(72) Inventor: Clements, Robert James, Chigwell Essex IG7 5PW (GB)
(74) Representative: Style, Kelda Camilla Karen

(57) **Abstract**

Apparatus for causing at least one signal to be sent to at least one member of a team, said apparatus having: a plurality of separate areas, with at least two areas being associated with different members of said team; said plurality of separate areas being activatable so that said apparatus allows at least one signal to be sent to the or each member associated with the activated area.

## Description

The present invention relates to apparatus for use, in particular but not exclusively, team sports.

In, for example, football, two teams are arranged to play against each other. The coach/manager of the team is able to instruct the players before a match and during half time. Additionally, the coach/manager may be able to get instructions relayed from the touch line. Coaches/managers are often regarded as being pivotal to the success or otherwise of a team. However, whilst the match is actually being played the coach/manager has very little influence over his team. From the coach's/manager's perspective, this is highly undesirable given that his job may rely on his team winning.

Reference is made to US Patent Application No. US 2003/0071733. This discloses a system for allowing the position of the team members to be tracked. It does describe enabling secure communication to occur between a team member and their team mates, fans or coaches. However, there is no discussion in this document as to how an apparatus for enabling this could be implemented in a simple and user friendly way.

It is an aim of embodiments of the present invention to address this problem.

According to one aspect of the invention, there is provided apparatus for causing at least one signal to be sent to at least one member of a team, said apparatus having:
a plurality of separate areas, with at least two areas being associated with different members of said team;
said plurality of separate areas being activatable so that said apparatus allows at least one signal to be sent to the or each member associated with the activated area.

According to another aspect of the invention, there is provided apparatus comprising:
a structure in which a person can be accommodated; and
a support for supporting said structure, said structure being arranged to be movable relative to said support, said apparatus being provided with control apparatus for sending signals to at least one player of a game.

According to a third aspect, there is provided apparatus for use during a sports match between two teams, each team comprising a plurality of players, said apparatus being arranged to permit communication between a third party and one of said teams, said apparatus being arranged to permit said third party to selectively communication with all of team and individuals in said team.

For a better understanding of the present invention and as to how the same may be carried into effect, reference will now be made by way of example only to the accompanying drawings in which:
Figure 1 shows a first apparatus embodying the present invention;
Figure 2 shows the display of Figure 1 in one mode of operation;
Figure 3 shows an example of a device worn by a team member; and
Figure 4 schematically shows circuitry of the apparatus of Figure 1;
Figure 5 shows a first structure embodying the present invention; and
Figure 6 shows a second structure embodying the present invention.

The following discussion will be in relation to the game of football. However, it should be appreciated that embodiments of the present invention can be applied to any other sport, particularly team sports such as hockey, American football, rugby, ice hockey, basketball, baseball, or the like.

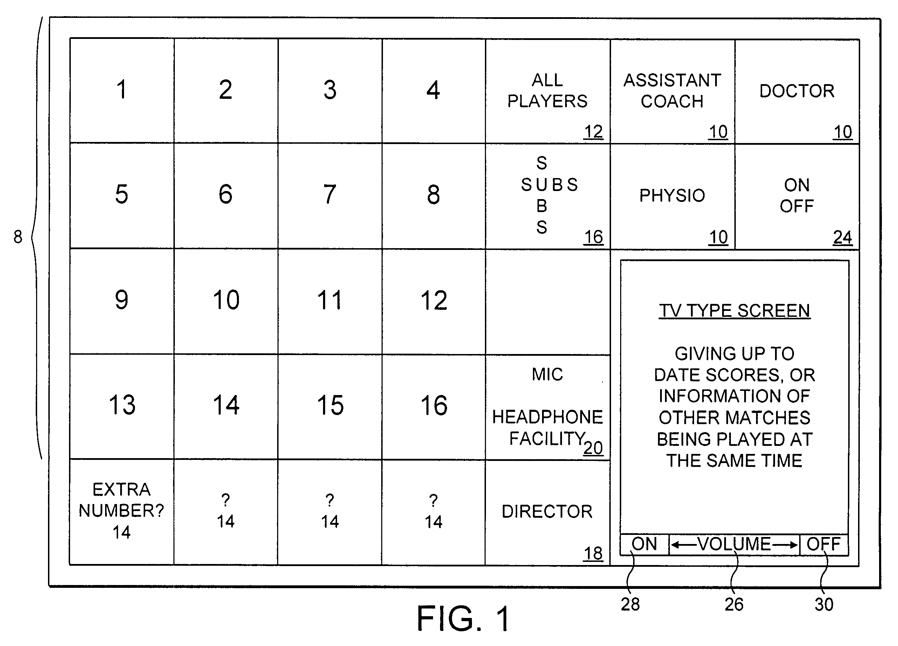

Reference is now made to Figure 1 which shows a first apparatus 2 embodying the present invention. The apparatus 2 comprises a mat type structure which may be flexible or rigid. If flexible, the mat like structure may be provided in a box 4. The containing box 4 may comprise cork, rubber, plastic or any other suitable substance or combinations of substances. The box may be rigid and robust enough to provide some protection for the mat.

The mat is divided up into different areas 6. The areas 6 in block 8 are each provided with a number. In embodiments of the invention, this would correspond to the shirt number of a team member. Alternatively, or additionally, the individual areas may indicate the name of the player. Those areas marked 10 are for members of the support team such as the assistant coach, a doctor, a physiotherapist, any other medical personnel or the like. The area marked 12 allows all the players to be selected as will be described later. Those areas marked 14 can be used for example for substitutes when they are put onto the field of play. The area marked 16 can be used for the substitutes when they are on the bench or alternatively for the substitutes on the field. In that case, keys 14 may not be required.

There is also an area 18 for the director.

The different areas when actuated by the user allow the football coach/manager to speak to the individual or individuals associated with that area. To achieve this, a microphone 20 is provided. The microphone 20 may be inbuilt in the apparatus 2, be a handheld device and/or be provided by a headset. To communicate with a particular individual or group of individuals, the coach/manager will activate the associated area and this will allow communication with the individual concerned. If the coach/manager wishes to speak to all of the players at the same time, he will activate area 12. If he wishes to talk to various members of the support team, that is the assistant coach, the physiotherapist, or the doctor, he will then activate the associated area. For the support team, the names of the individuals providing those roles may alternatively or additionally be provided alongside the information on their role.

In one preferred embodiment of the present invention, there is a display area 22 which can be used to provide various types of information. In the example shown in Figure 1, the display 22 provides information on current scores of other matches being played at the same time.

The apparatus also has an ON/OFF area which when activated either switches the device ON or OFF. The ON/OFF area may change its appearance when it is ON from when it is OFF.

Volume control 26 may be provided along with areas 28 which allows the volume to be on and area 30 which allows the volume to be off.

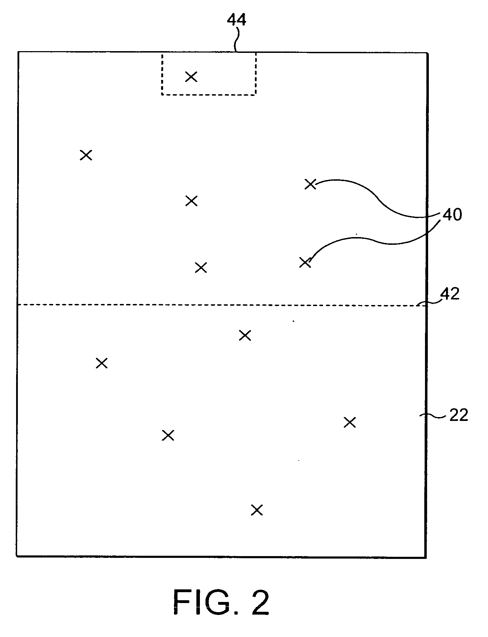

Reference is now made to Figure 2 which shows display screen 22 of Figure 1. In Figure 2, the display screen is used to display the position 40 of the team members. The display may also show a half way line 42 and may indicate goal areas. In some embodiments of the present invention, members from both teams would be shown. In that circumstance, the members of the different teams would be displayed in different ways, for example in different colours and/or using different shapes.

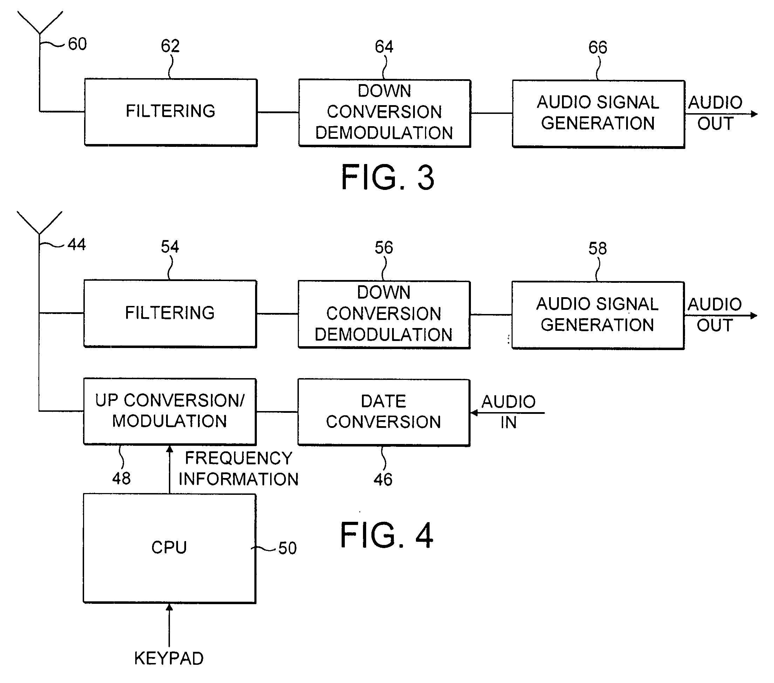

Reference is now made to Figure 4 which shows the circuitry included in the apparatus of Figure 1. The circuitry of Figure 4 is schematic. The circuitry includes an antenna 44. The antenna is arranged to receive signals from the team members and to transmit signals to team members. In the transmitting chain, there is a data conversion circuitry 46 which receives an audio signal input. The audio signal is converted into a suitable form in which it can be modulated onto a carrier frequency. The audio input to the data conversion circuitry 46 is provided from the microphone.

In circuitry 48, the data output by the circuitry 46 is up converted to the radio frequency and the carrier frequency is modulated by the data. In one embodiment of the present invention, different frequencies are used for different users. Accordingly, the up conversion circuitry 48 may have an input from a computer processing unit (CPU) 50 which provides the frequency information. The frequency information is derived from an input to the CPU 50 from the keypad which identifies the team member or members to which a signal is to be sent.

On the receive chain, the received signal is input to filtering circuitry 54 which removes unwanted signals. The filtering circuitry 54 is input to down conversion and demodulation circuitry 56. The down conversion and demodulation circuitry down converts the signal to the baseband frequency and demodulates it. From the data output by the down conversion and demodulation circuitry, audio signal generation circuitry 58 generates an audio output. This audio output can be provided to a speaker or earpiece for the coach/manager.

Reference is made to Figure 3 which shows the construction of a small device worn by a team member. There is an antenna 46 which receives signals. The received signals are input to a filtering unit 62 which removes unwanted signals. Down conversion and demodulation circuitry 64 provides similar functionality to circuitry 56 of Figure 4. Likewise, the audio signal generation circuitry 66 functions in a similar way to that circuitry 58 of Figure 4.

In preferred embodiments of the present invention, radio frequencies are used for transmitting signals intended for the team members. However, it should be appreciated that in alternative embodiment of the present invention, different frequencies may be used.

In one embodiment of the present invention different frequencies are used for information to be sent to different users. Each team member's receiving equipment would then be tuned accordingly. However, other alternatives may be used for distinguishing the signals such as use of allocated timeslots and/or coding. In embodiments of the present invention, the apparatus 2 may be arranged only to send out signals and thus not to receive any feedback from team members. Alternatively, the apparatus on the team members may also be arranged to transmit a signal containing audio information back to the base unit, as illustrated in Figure 4. This allows the coach/manager to hear comments from the players.

In addition to providing signals containing audio information, the signals provided by the apparatus which is worn by the team players may also be used to track the position of the user so that the position of the display of the team player on the pitch, such as illustrated in Figure 2 can be shown. Any suitable technology can be used for tracking the position of the user. One example of a way of tracking the position of a user is described in US 2003/0071733 A1.

In one embodiment of the present invention, the active areas are provided on a flexible mat. In alternative embodiments of the present invention, the flexible mat may be replaced with a rigid mat. A selected area can be activated by the user pushing a finger or tool against the selected area. Pressure sensitive switches underneath the surface of the mat would then be activated to send appropriate signals to the CPU 50.

In an alternative embodiment of the present invention, the apparatus 2 can be provided by a touch screen device. This means that the user of the apparatus would simply touch the relevant area to obtain the results described.

In another embodiment of the present invention, a personal computer or portable computing device such as a laptop, portable digital assistant or the like can be used. In that situation, the information shown in Figure 1 would be displayed on this screen and a selected area could be activated by moving a mouse or touching the screen if it is a touch activated screen.

Alternatively, keys may be provided which are suitably activated. For example, a number pad can be used with the coach/manager inputting the desired numbers to talk to the numbered players. Alternatively, where a keyboard is provided, a mat may be provided over that which associates various functions with various keys. The display may be omitted or provided separately from the active areas.

The transmitter and receiver may be provided by a separate add on device to the apparatus which communicates appropriately therewith.

Thus, embodiments of the present invention allow a coach/manager to speak to an individual or the whole team at the same time depending on the message that the coach/manager wishes to convey.

Embodiments of the present invention may therefore be provided by a computer program.

The apparatus could be designed to be placed on a table, to fit on somebody's knees or even to be handheld.

Embodiments of the present invention thus allow the coach or coach/manager to provide instructions.

The receiver device worn by the players may be taped to the back of the ear, possibly attached to the collars or sewn in the collars of player's shirts. This is to allow them to hear the instructions. The earpieces may have a felt like material piece which is stuck to the back of the ear so that this can be used to accommodate the receiver. In another alternate embodiment of the invention, the receiver device may be surgically implanted into a player. This may be used alternatively or additionally to track the position of the player on the pitch and/or when he is not playing, for example in his free time.

In one modification, the coaches may be provided in the same or different rooms beside the pitch. The room may be elevated up or down so as to allow the coach/manager to have the best view, depending on where the players are located. For example, the coaches/managers may be able to raise their rooms to a height of say 20 feet. The rooms may be sound-proofed.

In one embodiment, the coaches/managers for each team shake hands in the centre of the pitch, in front of the crowd, prior to the beginning of a game. The coaches/managers would then walk to opposite sides of the halfway line to enter their own pod or building structure to orchestrate proceedings. The coaches/managers may be provided in the same structure in alternative embodiments of the invention but preferably in separate compartments or rooms.

The coaches/managers may come out of the pod or structure at half time and again at full time. The coaches/managers may wait until the players have left the field. This is so the losing fans will begin to disburse while the winning fans wait for the winning manager/coach.

The structure or pod is arranged to have a console fitted therein. Alternatively the coaches/managers may bring their own. The coach/manager will sit or stand in the pod or structure, the pod or structure providing a clear view of the pitch. Alternatively the coaches/managers may rely on cameras to provide a view of the pitch.

The structure may be sound proofed.

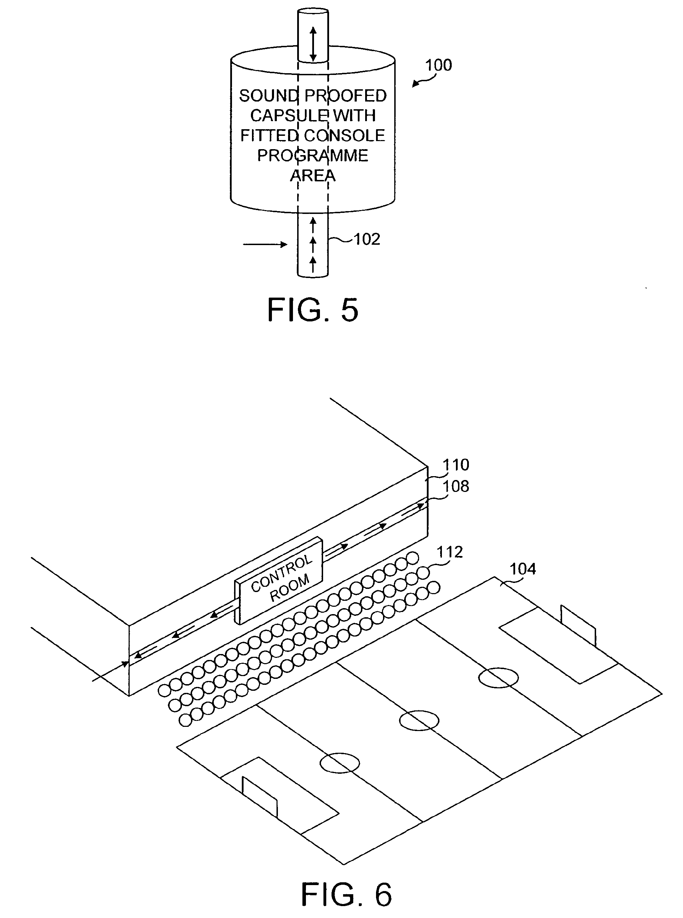

The structure can take any suitable form. Figure 5 shows a pod or capsule 100 mounted on a pole 102. The pole can be of any suitable material such as reinforced concrete, concrete, metal or the like. The capsule or pod 100 is arranged to move up and down the pole. This may be controlled from within the pod or capsule. This allows the coaches/managers to lower the pod or capsule to get in it and then to raise the pod or capsule to allow the coaches/manager to view the pitch.

The pod or capsule can be of any suitable shape such as round, cylindrical, square, rectangular, triangular or any other suitable shape.

Reference is made to Figure 6 which shows a second embodiment of the present invention. In this case the structure 106 I arranged to run along or at the level of a first tier of upper positioned fans. Thus the structure would be arranged above some of the fans 112. A rail 108 or the like is attached to a wall, advertising fascia or similar support 110. This arrangement allows the structure to move along the rail. This may be controlled from within the structure.

The structure is positioned to allow the coaches/managers to view the pitch.

The apparatus embodying the present invention may be provided in the form of a console.

The apparatus may be password, fingerprint or similarly protected. This is to prevent unauthorised access to the apparatus and hence the players.

It is desirable to prevent third parties from listening to the communications between the coach/manager and the players or the like. Accordingly, encryption may be used for the communications. Encryption techniques are well known in the art and any appropriate technique may be used in embodiment of the invention.

Embodiments of the present invention have discussed the role of managers/coaches. It should be appreciated that embodiments of the present invention can be used by any other individual or individuals in charge of a team during a game.

Embodiments of the present invention are particularly applicable to the game itself. Thus the communications take place in some embodiments only during the game itself.

## Claims

**1.** Apparatus for causing at least one signal to be sent to at least one member of a team, said apparatus having:
a plurality of separate areas, with at least two areas being associated with different members of said team;
said plurality of separate areas being activatable so that said apparatus allows at least one signal to be sent to the or each member associated with the activated area.

**2.** Apparatus as claimed in claim 1, wherein said apparatus comprises a transmitter to transmit said at least one signal to be transmitted to the or each member associated with the activated area.

**3.** Apparatus as claimed in any preceding claim, wherein said apparatus comprises a microphone.

**4.** Apparatus as claimed in claim 3, wherein said at least one signal comprises audio information.

**5.** Apparatus as claimed in any preceding claim, wherein said separate areas comprise one of:
keys;
areas of touchscreen;
areas of a display; and
areas of touch sensitive mat.

**6.** Apparatus as claimed in any preceding claim, wherein at least one of said separate areas is associated with at least one member of a support team.

**7.** Apparatus as claimed in claim 6, wherein said support team comprises at least one of the following:
coach;
assistant coach;
physiotherapist;
doctor; and
medical support.

**8.** Apparatus as claimed in any preceding claim, wherein a separate area is provided for at least some of said members of said team.

**9.** Apparatus as claimed in any preceding claim, wherein at least one area is associated with a plurality of team members.

**10.** Apparatus as claimed in any preceding claim, wherein confirmation is provided for at least separate area indicating the one or more team members associated with that at least one separate area.

**11.** Apparatus as claimed in claim 10, wherein said information comprises at least one of:
a name of the team member;
a number of the team member; and
a role performed by the team member.

**12.** Apparatus as claimed in any preceding claim comprising input means for inputting a substitute team member.

**13.** Apparatus as claimed in any preceding claim, comprising receiving means for receiving signals from at least one team member.

**14.** Apparatus as claimed in claim 13, wherein said received signals comprise at least one of:
position defining information; and
audio information.

**15.** Apparatus as claimed in any preceding claim, wherein said apparatus is arranged to encrypt said signals.

**16.** A computer program which when loaded onto a computer is arranged to cause said computer to display a plurality of separate areas, with at least two areas being associated with different members of said team, said plurality of separate areas being activatable so that said apparatus allows at least one signal to be sent to the or each member associated with the activated area.

**16.** Apparatus as claimed in any preceding claim, wherein display means is provided for providing news information.

**17.** Apparatus as claimed in claim 15 or 16, wherein said display means is provided adjacent said plurality of separate areas.

**18.** Apparatus comprising:
a structure in which a person can be accommodated; and
a support for supporting said structure, said structure being arranged to be movable relative to said support, said apparatus being provided with control apparatus for sending signals to at least one player of a game.

**19.** Apparatus as claimed in claim 18, wherein said structure is arranged to move one of horizontally and vertically.

**20.** Apparatus as claimed in claim 18 or 19, wherein said control apparatus comprises apparatus as claimed in any of claims 1 to 17.

**21.** Apparatus as claimed in any of claims 18 to 20, wherein said structure is arranged to permit a pitch to be viewed.

**23.** Apparatus for use during a sports match between two teams, each team comprising a plurality of players, said apparatus being arranged to permit communication between a third party and one of said teams, said apparatus being arranged to permit said third party to selectively communication with all of team and individuals in said team.
